# EUROPEAN PATENT APPLICATION

(11) **EP 4 679 791 A1**
(43) Date of publication of application: **14.01.2026**
(21) Application number: 24777528.1
(22) Date of filing: 05.02.2024
(51) Int. Cl.: H04L 41/50

(54) **METHOD AND SYSTEM FOR ACCESS MANAGEMENT**

(30) Priority: 31.03.2023 CN 202310339767
(71) Applicant: Huawei Cloud Computing Technologies Co., Ltd., Guiyang, Guizhou 550025 (CN)
(72) Inventor: XIE, Peng, Guiyang, Guizhou 550025 (CN)
(74) Representative: Gill Jennings & Every LLP
(86) International application number: PCT/CN2024/075967
(87) International publication number: WO 2024/198734

(57) **Abstract**

Embodiments of this application relate to the cloud computing field, and provide an access management method and system. The system includes an operation and maintenance channel management cluster and a client. The client runs on a target server. The method includes: The operation and maintenance channel management cluster obtains an access command of a user for the target server; the operation and maintenance channel management cluster sends the access command to the client; and the client executes the access command based on session state information, where the session state information is information that is about access of the user to the target server and that is recorded by the client. In the foregoing method, the state information is recorded on the client located on the server, and an operation and maintenance channel instance distributes the access command to the client, so that the operation and maintenance channel instance is stateless. In this way, the operation and maintenance channel instance can be switched without interrupting a service, and the operation and maintenance channel management cluster can implement rapid scaling.

## Description

This application claims priority to Chinese Patent Application No. 202310339767.6, filed with the China National Intellectual Property Administration on March 31, 2023, and entitled "ACCESS MANAGEMENT METHOD AND SYSTEM", which is incorporated herein by reference in its entirety.

### TECHNICAL FIELD

Embodiments of this application relate to the cloud computing field, and more specifically, to an access management method and system.

### BACKGROUND

**In** the cloud computing field, cloud service providers need to manage more and more cloud service resources, and access security of the cloud service resources becomes more and more important. Therefore, many cloud service providers choose to deploy a bastion host as an operation and maintenance security access audit system to centrally manage users' access requests to servers.

However, an existing bastion host system needs to record state information such as a login state of the user and control of a session established between the user and the server. This is referred to as a stateful service. Bastion host nodes are stateful. Therefore, if a node needs to be replaced or a new node needs to be added, a state of the bastion host node needs to be reconfigured. This process takes some time. As a result, the bastion host system cannot implement fast redundancy or capacity expansion. Therefore, how to enable an operation and maintenance channel management cluster to quickly replace a node without disconnection becomes a technical problem that urgently needs to be resolved.

### SUMMARY

Embodiments of this application provide an access management method and system. State information may be recorded on a client located on a server, and an operation and maintenance channel instance distributes an access command to the client, so that the operation and maintenance channel instance is stateless. In this way, the operation and maintenance channel instance can be switched without interrupting a service.

According to a first aspect, an access management method is provided, where the method is applied to an access management system, the system includes an operation and maintenance channel management cluster and a client, the client runs on a target server, the operation and maintenance channel management cluster includes a plurality of operation and maintenance channel instances, each operation and maintenance channel instance is configured to exchange information with the client, each operation and maintenance channel instance includes at least one compute instance, the at least one compute instance includes at least one of a physical host, a virtual machine, and a container, and the method includes: The operation and maintenance channel management cluster obtains an access command of a user for the target server; the operation and maintenance channel management cluster sends the access command to the client; and the client executes the access command based on session state information, where the session state information is information that is about access of the user to the target server and that is recorded by the client.

According to the technical solution provided in this application, the client is disposed on the server as an entry of accessing the server. The operation and maintenance channel management cluster directly communicates with the client, and distributes the access command to the client, so that a task of recording state information and managing a session is completed by the client, and the operation and maintenance channel instance is stateless. In this way, the operation and maintenance channel management cluster is used to isolate direct interaction between the user and the server. On the premise of ensuring server access security, the operation and maintenance channel instance can be switched without interrupting a service, and the operation and maintenance channel management cluster can implement rapid scaling.

With reference to the first aspect, in some implementations of the first aspect, the operation and maintenance channel management cluster further includes a load balancing component, the plurality of operation and maintenance channel instances include a first operation and maintenance channel instance and a second operation and maintenance channel instance, and the sending the access command to the client includes: The load balancing component sends the access command to the first operation and maintenance channel instance; and the first operation and maintenance channel instance sends the access command to the client.

According to the foregoing technical solution, a plurality of nodes are disposed in the operation and maintenance channel management cluster, so that the operation and maintenance channel management cluster can manage a node responsible for distributing the access command, and the operation and maintenance channel management cluster can autonomously adjust a working state of the node when required.

With reference to the first aspect, in some implementations of the first aspect, the sending the access command to the client further includes: The first operation and maintenance channel instance reports exception information to the load balancing component, where the exception information indicates that the first operation and maintenance channel instance fails to send the access command to the client; the load balancing component sends the access command to the second operation and maintenance channel instance; and the second operation and maintenance channel instance sends the access command to the client.

According to the foregoing technical solution, when the operation and maintenance channel instance that is currently responsible for forwarding the access command is abnormal, a forwarding task is reallocated to another node in the operation and maintenance channel management cluster, to implement node switching without interrupting access. This improves fast redundancy or a load balancing capability of the operation and maintenance channel management cluster, and improves availability of the service of the operation and maintenance channel management cluster.

With reference to the first aspect, in some implementations of the first aspect, the first operation and maintenance channel instance and the second operation and maintenance channel instance are deployed in different regions.

According to the foregoing technical solution, the nodes in the operation and maintenance channel management cluster can be deployed across regions (region), so that nodes responsible for forwarding before and after switching are located in different physical regions. This reduces a possibility that exceptions occur at the same time, implements geographic redundancy, and further improves availability of the service of the operation and maintenance channel management cluster.

With reference to the first aspect, in some implementations of the first aspect, the sending the access command to the client further includes: The first operation and maintenance channel instance reports exception information to the load balancing component, where the exception information indicates that the first operation and maintenance channel instance fails to send the access command to the client; the load balancing component establishes a third operation and maintenance channel instance; the load balancing component sends the access command to the third operation and maintenance channel instance; and the third operation and maintenance channel instance sends the access command to the client.

According to the foregoing technical solution, when the operation and maintenance channel instance that is currently responsible for forwarding the access command is abnormal, a new operation and maintenance channel instance is deployed, and the forwarding task is reallocated to the new operation and maintenance channel instance, to implement capacity expansion of the operation and maintenance channel management cluster without interrupting access. This improves a rapid capacity expansion capability of the operation and maintenance channel management cluster, and improves availability of the service of the operation and maintenance channel management cluster.

With reference to the first aspect, in some implementations of the first aspect, the sending an access command to the client includes: The operation and maintenance channel management cluster sends the access command to the client based on a transmission control protocol.

According to the foregoing technical solution, the operation and maintenance channel instance and the client directly communicate with each other by using the transmission control protocol (transmission control protocol, TCP) at a transport layer, so that a secure shell (secure shell, SSH) protocol can be avoided as a remote connection tool. The server does not need to enable a high-risk port 22 for an SSH service. In this way, security of the server is improved.

With reference to the first aspect, in some implementations of the first aspect, the access command includes a session identifier, the session state information includes a correspondence between the session identifier and a subprocess in an operating system of the target server, and the executing the access command based on the session state information includes: determining, based on the session identifier of the access command and the session state information, the subprocess corresponding to the session identifier; and invoking the subprocess to execute the access command.

According to the foregoing technical solution, the client allocates an identifier value to a session of each user, manages the session based on the identifier value carried in a user instruction, and invokes a corresponding subprocess in a server operating system to execute a command, so that the client can separately manage sessions of different users. This improves access management efficiency.

With reference to the first aspect, in some implementations of the first aspect, before obtaining the access command of the user for the target server, the method further includes: The operation and maintenance channel management cluster obtains a login command of the user; the operation and maintenance channel management cluster sends the login command to an authentication and authorization service, where the authentication and authorization service is used to authenticate an identity of the user; the operation and maintenance channel management cluster receives authentication information from the authentication and authorization service; and the operation and maintenance channel management cluster determines a login state of the user based on the authentication information.

According to the technical solution provided in this application, the operation and maintenance channel management cluster provides identity authentication for the user by interacting with an external service, so that the login state of the user does not need to be recorded in a node of the operation and maintenance channel management cluster. In this way, after the user logs in, the user does not need to log in again when a node that provides a service is replaced. This feature improves user experience while ensuring user access security.

With reference to the first aspect, in some implementations of the first aspect, before sending the access command to the client, the method further includes: The operation and maintenance channel management cluster obtains access permission from an external storage service; and the operation and maintenance channel management cluster determines that the access command meets the access permission.

According to the foregoing technical solution, the operation and maintenance channel management cluster obtains the access permission of the user for the server from the external storage service, so that any node in the operation and maintenance channel management cluster can manage the access permission of the user without pre-configuration. This improves access management security.

With reference to the first aspect, in some implementations of the first aspect, the method further includes: The client sends an execution result of the access command to the operation and maintenance channel management cluster; and the operation and maintenance channel management cluster sends the execution result to the user.

According to the foregoing technical solution, an access result is presented to the user through the operation and maintenance channel management cluster, so that the operation and maintenance channel management cluster can monitor an entire process in which the user accesses the server. This facilitates monitoring and auditing of user behavior, and improves access management security.

According to a second aspect, an access management system is provided, where the system includes an operation and maintenance channel management cluster and a client, the client runs on a target server, the operation and maintenance channel management cluster includes a plurality of operation and maintenance channel instances, each operation and maintenance channel instance is configured to exchange information with the client, each operation and maintenance channel instance includes at least one compute instance, the at least one compute instance includes at least one of a physical host, a virtual machine, and a container, and the operation and maintenance channel management cluster includes: a command obtaining module, configured to obtain an access command of a user for the target server; a command distribution module, configured to send the access command to the client; and the client is configured to: execute the access command based on session state information, where the session state information is information that is about access of the user to the target server and that is recorded by the client.

With reference to the second aspect, in some implementations of the second aspect, the operation and maintenance channel management cluster further includes a load balancing component, the plurality of operation and maintenance channel instances include a first operation and maintenance channel instance and a second operation and maintenance channel instance, and the load balancing component is configured to: send the access command to the first operation and maintenance channel instance; and the first operation and maintenance channel instance sends the access command to the client.

With reference to the second aspect, in some implementations of the second aspect, the first operation and maintenance channel instance is further configured to: report exception information to the load balancing component, where the exception information indicates that the first operation and maintenance channel instance fails to send the access command to the client; the load balancing component sends the access command to the second operation and maintenance channel instance; and the second operation and maintenance channel instance sends the access command to the client.

With reference to the second aspect, in some implementations of the second aspect, the first operation and maintenance channel instance and the second operation and maintenance channel instance are deployed in different regions.

With reference to the second aspect, in some implementations of the second aspect, the first operation and maintenance channel instance is further configured to: report exception information to the load balancing component, where the exception information indicates that the first operation and maintenance channel instance fails to send the access command to the client; the load balancing component establishes a third operation and maintenance channel instance; the load balancing component sends the access command to the third operation and maintenance channel instance; and the third operation and maintenance channel instance sends the access command to the client.

With reference to the second aspect, in some implementations of the second aspect, the command distribution module is configured to send the access command to the client based on a transmission control protocol.

With reference to the second aspect, in some implementations of the second aspect, the access command includes a session identifier, the session state information includes a correspondence between the session identifier and a subprocess in an operating system of the target server, and the client is configured to: determine, based on the session identifier of the access command and the session state information, the subprocess corresponding to the session identifier; and invoke the subprocess to execute the access command.

With reference to the second aspect, in some implementations of the second aspect, the operation and maintenance channel management cluster further includes a login authentication module, and before obtaining the access command of the user for the target server, the operation and maintenance channel management cluster is configured to: obtain a login command of the user; send the login command to an authentication and authorization service, where the authentication and authorization service is used to authenticate an identity of the user; receive authentication information from the authentication and authorization service; and determine a login state of the user based on the authentication information.

With reference to the second aspect, in some implementations of the second aspect, the operation and maintenance channel management cluster further includes a permission management module, and before sending the access command to the client, the operation and maintenance channel management cluster is configured to: obtain access permission from an external storage service; and determine that the access command satisfies the access permission.

With reference to the second aspect, in some implementations of the second aspect, the client is further configured to: send an execution result of the access command to the operation and maintenance channel management cluster; and the operation and maintenance channel management cluster further includes a result presentation module, configured to send the execution result to the user.

According to a third aspect, a computing device is provided, including a processor and a memory. The memory is configured to store instructions, and the processor is configured to invoke the instructions from the memory and run the instructions, so that the computing device performs the method according to any one of the first aspect or the possible implementations of the first aspect.

According to a fourth aspect, a computing device cluster is provided, including at least one computing device. Each computing device includes a processor and a memory. The memory is configured to store instructions, and the processor is configured to invoke the instructions from the memory and run the instructions, so that the computing device cluster performs the method according to any one of the first aspect or the possible implementations of the first aspect.

Optionally, the processor may be a general-purpose processor, and may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a fifth aspect, a chip is provided. The chip obtains instructions and executes the instructions to implement the method according to any one of the first aspect or the possible implementations of the first aspect.

Optionally, in an implementation, the chip includes a processor and a data interface. The processor reads, through the data interface, instructions stored in a memory, to perform the method according to any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the method according to any one of the first aspect or the possible implementations of the first aspect.

According to a sixth aspect, a computer program product including instructions is provided. When the instructions are run by a computing device cluster, the computing device cluster is enabled to perform the method in any one of the first aspect or the possible implementations of the first aspect.

According to a seventh aspect, a computer-readable storage medium is provided, including computer program instructions. When the computer instructions are executed by a computing device cluster, the computing device cluster is enabled to perform the method in any one of the first aspect or the possible implementations of the first aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

### BRIEF DESCRIPTION OF DRAWINGS

FIG. 1 is a diagram of a bastion host system;
FIG. 2 is a diagram of an architecture of an access management system according to an embodiment of this application;
FIG. 3 is a schematic flowchart block diagram of an access management method according to an embodiment of this application;
FIG. 4 is a schematic flowchart block diagram of scheduling an operation and maintenance channel instance according to an embodiment of this application;
FIG. 5 is a schematic flowchart block diagram of another access management method according to an embodiment of this application;
FIG. 6 is a block diagram of a structure of an access management system according to an embodiment of this application;
FIG. 7 is a schematic flowchart block diagram of an operation and maintenance channel management cluster in an access management system according to an embodiment of this application;
FIG. 8 is a block diagram of a structure of a computing device according to an embodiment of this application;
FIG. 9 is a block diagram of a structure of a computing device cluster according to an embodiment of this application; and
FIG. 10 is a block diagram of a structure of another computing device cluster according to an embodiment of this application.

### DESCRIPTION OF EMBODIMENTS

The following describes technical solutions of embodiments in this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

For ease of understanding, the following first describes related terms and concepts that may be used in embodiments of this application.
1. Operation and maintenance channel management cluster: The operation and maintenance channel management cluster is also referred to as an operation and maintenance security audit system, which manages a cloud service resource accessed by a user in a centralized manner. The operation and maintenance channel management cluster receives an access command entered by the user and distributes the access command to a server where the cloud service resource is located. In this way, a system state, a security event, and a network activity of each component in a network environment can be collected and monitored in real time. This protects the network and data from intrusion and damage from external or internal users, and facilitates centralized alarm reporting, timely handling, and audit and responsibility determination. In another implementation solution, the operation and maintenance channel management cluster is also referred to as a bastion host, a cloud bastion host, or the like.
2. Session control: A session is a connection established when a terminal user communicates with an interactive system. A session control (session) object stores an attribute and configuration information required by a specific user to access a specific service. In this way, when the user switches between services, a variable stored in the session control object is not lost, but exists throughout user session. When the user requests to access a specific service, the server automatically creates the session control object if the user does not have a session. For a session for which the session control object has been established, an access instruction newly sent by the user needs to be executed based on session state information stored in the session control object. The session state information is information about access of the user to the server. For example, the session state information may include an identity of the user, a preference of the user, an access command that has been executed by the user for the service, and the like. When a session expires or is abandoned, the server terminates the session.

In the cloud computing field, cloud service providers need to manage more and more cloud service resources, and a quantity of users accessing the cloud service resources increases. If a server that provides the cloud service resource directly manages user access, each server needs to store and process a large amount of user information and access records. This is not conducive to centralized management of access permission, resulting in a waste of a large quantity of computing resources and low access efficiency. In addition, the cloud service resources are becoming more and more important. Therefore, access security is becoming more and more important. If the user can directly access the server, a server address will be exposed, causing security risks. In addition, it is difficult to locate and audit responsibilities when attacked.

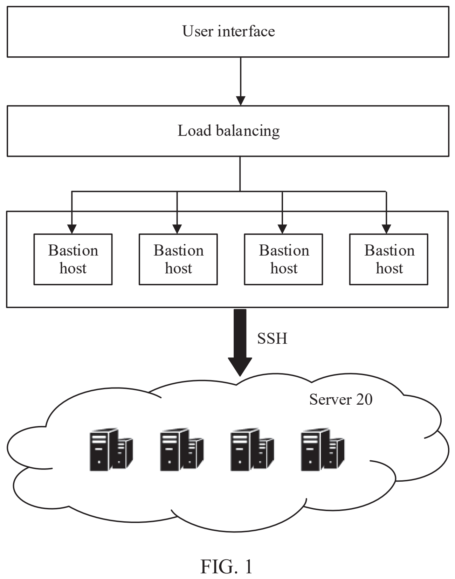

Therefore, many cloud service providers choose to deploy an operation and maintenance security access audit system, such as a bastion host, between the user and the server to centrally manage user' access request to the server. FIG. 1 shows an existing bastion host system. As shown in FIG. 1, the bastion host system includes a plurality of bastion hosts, a user interface (portal), and a load balancing (nginx) component. The bastion host provides functions such as verification, authorization, authentication , command audit, behavior recording, and playback. A user interface is used to provide a front-end operation interface for a user to log in to the bastion host and access a cloud service resource. An access command entered by the user on the user interface is forwarded to the bastion host through the load balancing component. The bastion host uses a secure shell (secure shell, SSH) protocol to send the access command to a server on which a target cloud service resource is located.

However, in the bastion host system shown in FIG. 1, because the bastion host needs to record state information such as a login state of the user and session control (session) established between the user and the server, the bastion host is referred to as stateful. Bastion host nodes are stateful. If a node needs to be replaced or a new node needs to be added, the state information of the bastion host node needs to be reconfigured. For example, if the bastion host cluster has N nodes, after a single bastion host node is faulty, 1/N of ongoing sessions of the user may be disconnected. An operation and maintenance personnel needs to re-authenticate and establish a new connection. The entire process takes at least several minutes to recover. The bastion host is stateful. As a result, the bastion host system cannot implement fast redundancy or capacity expansion. Therefore, how to enable an operation and maintenance channel management cluster to quickly replace a node without disconnection becomes a technical problem that urgently needs to be resolved.

In view of this, an embodiment of this application provides an access management method. The method is applied to an access management system, and the system includes an operation and maintenance channel management cluster and a client running on a server. State information is recorded on the client located on the server, and an operation and maintenance channel instance distributes the access command to the client, so that the operation and maintenance channel instance is stateless. In this way, the operation and maintenance channel instance can be switched without interrupting a service.

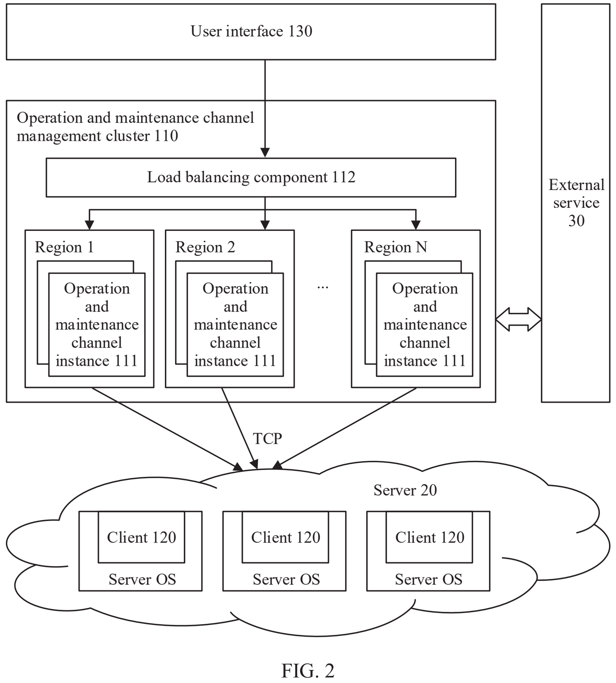

FIG. 2 shows a diagram of an architecture of an access management system according to this application. As shown in FIG. 2, the system includes an operation and maintenance channel management cluster 110 and a client 120 running on a server 20.

The client 120 is configured to establish and manage a session control object of a user. Specifically, the client 120 stores session state information. When receiving an access command, the client 120 performs command interaction with an operating system (operating system, OS) of the server 20 based on the session state information in the session control object, to execute the access command of the user, and returns an execution result of the access command to the user.

The operation and maintenance channel management cluster 110 is configured to distribute the access command entered by the user, and may further present, to a customer, the execution result returned after the client 120 executes the access command. The operation and maintenance channel management cluster 110 includes a plurality of operation and maintenance channel instances 111. Each operation and maintenance channel instance 111 may include one or more compute instances. The compute instance may include at least one of a physical host (a computing device), a virtual machine, and a container. Optionally, different operation and maintenance channel instances 111 may be distributed in different regions (region), or may be distributed in a same region. In other words, each region may include a plurality of operation and maintenance channel instances, and different regions correspond to different physical regions. Optionally, the operation and maintenance channel management cluster 110 may further include a load balancing (nginx) component 112, configured to forward a request for accessing the operation and maintenance channel management cluster by the user to a specific operation and maintenance channel instance 111.

Optionally, the operation and maintenance channel management cluster 110 may perform command transmission with the client 120 by using a transmission control protocol (transmission control protocol, TCP). In an existing implementation solution of the operation and maintenance channel management cluster such as a bastion host, the operation and maintenance channel management cluster uses a secure shell (secure shell, SSH) protocol as a remote connection tool to the server. To use the SSH service, a port 22 of the server needs to be enabled. This port has many vulnerabilities. Attackers can detect this port for remote access and launch security attacks, causing security risks to the server. Components in the system can directly communicate with each other by using the TCP protocol at a transport layer. This avoids use of the SSH service and improves security of the server.

Optionally, the system may further include a front-end component user interface 130. The user interface 130 provides an access interface (for example, an interface or an application program interface (application program interface, API)). The user may remotely access the access interface through an operation interface such as a web page or an application, register a cloud account and a password on the user interface 130, and log in to the operation and maintenance channel management cluster 110. After the operation and maintenance channel management cluster 110 successfully authorizes the cloud account and the password, the user may further send an access command to the operation and maintenance channel management cluster 110 through the user interface 130. The user interface 130 may further display, to the user through the operation interface, an execution result returned by the operation and maintenance channel management cluster 110.

Optionally, the operation and maintenance channel management cluster 110 may communicate with the user interface 130 by using a web socket (WebSocket) protocol. In the WebSocket protocol, only one handshake needs to be completed between the operation and maintenance channel management cluster 110 and the user interface 130, so that a persistent connection can be directly established between the operation and maintenance channel management cluster 110 and the user interface 130, and bidirectional data transmission can be performed. Therefore, the operation and maintenance channel management cluster 110 can receive user input in real time and return an execution result.

Optionally, the operation and maintenance channel management cluster 110 may further exchange information with an external service 30, and provide an additional function for the operation and maintenance channel management cluster 110 through another cloud service. The external service 30 may include but is not limited to an authentication and authorization service, an audit management service, a storage service, and the like. For example, the authentication and authorization service may be identity and access management (identity and access management, IAM), and provides identity authentication for a user that requests to log in to the operation and maintenance channel management cluster 110. For another example, the audit management service may be a cloud trace service (cloud trace service, CTS), and records, for the operation and maintenance channel management cluster 110, an access command forwarded by the operation and maintenance channel management cluster 110 and an execution result, to facilitate future query, audit, and backtracking by the user. For another example, the storage service may be a relational database service (relational database service, RDS), and may store access permission of the user on the server or the cloud service in the server, so that the operation and maintenance channel management cluster 110 can obtain the access permission, to perform permission management on the access command sent by the user.

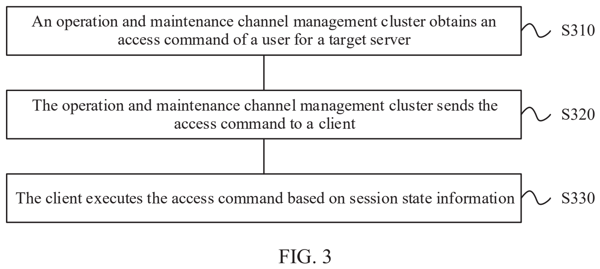

The following describes in detail an access management method in this application with reference to FIG. 3.

FIG. 3 shows a schematic flowchart block diagram of an access management method according to an embodiment of this application. Optionally, the method in FIG. 3 may be performed by an access management system, for example, the system shown in FIG. 2. Specifically, the system configured to perform the access management method provided in embodiments of this application includes an operation and maintenance channel management cluster and a client running on a server.

As shown in FIG. 3, the method includes the following steps.

S310: The operation and maintenance channel management cluster obtains an access command of a user for a target server.

For example, in step S310, the operation and maintenance channel management cluster may obtain the access command of the user for the target server. For example, the user may select a to-be-accessed cloud service resource and enter a specific access operation on a user interface. Based on the target server on which the cloud service resource is located, the user interface generates the access command of the user for the target server, and sends the access command to the operation and maintenance channel management cluster. Optionally, the operation and maintenance channel management cluster may obtain the access command from the user interface through a WebSocket protocol.

S320: The operation and maintenance channel management cluster sends the access command to the client.

For example, in step S320, the operation and maintenance channel management cluster may send the access command of the user for the target server to the client. For example, the operation and maintenance channel management cluster may be responsible for access management of a plurality of servers, a client is deployed on each server and is responsible for executing an access command of a corresponding server, and the access command indicates the target server. Therefore, the operation and maintenance channel management cluster can send the access command to the client on the target server.

Optionally, the operation and maintenance channel management cluster may send the access command to the client on the target server based on a TCP. The operation and maintenance channel management cluster directly communicates with the client by using the TCP at a transport layer, so that an SSH is not used as a remote connection tool. Therefore, the target server does not need to enable a high-risk port 22 for an SSH service, and server security is improved.

S330: The client executes the access command based on session state information.

For example, in step S330, the client on the target server may execute the access command. Specifically, the client can create a session object for a session established between the user and the target server, and the session object stores the session state information recorded by the client. Therefore, the client can execute the access command based on the session state information.

In an example, the user may send a plurality of consecutive and associated access commands within a time period in which the user establishes one session with the server. For example, the access command may include a first access command, a second access command, and a third access command. The first access command and the second access command are sent and executed before the third access command. The third access command needs to be executed based on content and execution results of the first access command and the second access command. When the client receives the third access command, session state information of a current session stored in the client may include the content and the execution results of the first access command and the second access command. Therefore, the client can correctly execute the third access command. If the session state information is lost, the third access command cannot be correctly executed.

Optionally, the client may simultaneously manage a plurality of sessions, and the client may invoke, based on different sessions corresponding to different access commands, different subprocesses for execution. Specifically, the client may separately establish session objects based on access of different users to different cloud services on the target server, and after establishing the session objects, the client allocates a unique session identifier to each session object. The access command may include the session identifier, so that the client may determine, based on the session identifier carried in the access command, a session corresponding to the access command. Further, the session state information may include a correspondence between a session identifier and a subprocess in a target server OS. Different subprocesses may be used to perform access operations on different cloud services. Therefore, after determining the session corresponding to the access command, the client can further determine a subprocess used to execute the access command. In the foregoing manner, the client can invoke, based on the session identifier in the access command and the session state information, a corresponding subprocess in the server OS to execute the command, so that the client can separately manage sessions of different users, thereby improving access management efficiency.

Optionally, after executing the access command, the client may further display an access result to the user through the operation and maintenance channel management cluster. Specifically, the client may send the execution result to the operation and maintenance channel management cluster, and the operation and maintenance channel management cluster sends the execution result to the user. For example, the operation and maintenance channel management cluster may send the execution result to the user interface, so that the user interface generates a visualized interface used to display the execution result to the user. Therefore, the operation and maintenance channel management cluster can monitor an entire process in which the user accesses the server. This facilitates monitoring and auditing of user behavior, and improves access management security.

According to the technical solution in this embodiment of this application, the client is disposed on the server as an entry of accessing the server, and the operation and maintenance channel management cluster directly communicates with the client, and distributes the access command to the client, so that the session state information can be recorded on the client instead of the operation and maintenance channel management cluster. Therefore, a node in the operation and maintenance channel management cluster is stateless, and during node switching, a new node can directly work without configuring session state information. This can avoid interruption of an established session caused by a lack of session state information. In this way, an operation and maintenance channel instance is switched without interrupting a service, and the operation and maintenance channel management cluster can implement rapid scaling.

For step S320, in some possible implementations, a plurality of nodes may be disposed in the operation and maintenance channel management cluster, so that the operation and maintenance channel management cluster can manage a node responsible for distributing the access command. Because the nodes in the operation and maintenance channel management cluster are stateless, the operation and maintenance channel management cluster can autonomously adjust a working state of the node when necessary. Specifically, the operation and maintenance channel management cluster may include a load balancing component and at least one operation and maintenance channel instance. The load balancing component is configured to forward the obtained access command to a currently working operation and maintenance channel instance, and the operation and maintenance channel instance is configured to send the access command to the client.

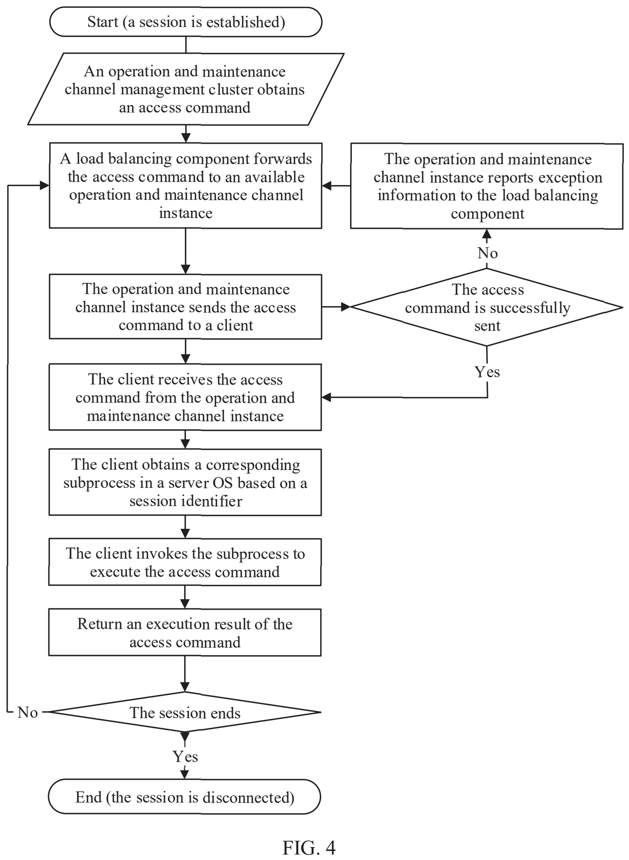

In this case, FIG. 4 shows a schematic flowchart of scheduling an operation and maintenance channel instance according to an embodiment of this application. As shown in FIG. 4, a session established between the user and the server is used as a start of a procedure, and the session established between the user and the server is disconnected as an end. In this process, after the operation and maintenance channel management cluster obtains the access command, the load balancing component forwards the access command to a currently working operation and maintenance channel instance, and the operation and maintenance channel instance sends the access command to the client.

For example, the operation and maintenance channel management cluster may include a first operation and maintenance channel instance, and the load balancing component may forward an obtained first access command to the first operation and maintenance channel instance. The first operation and maintenance channel instance sends the first access command to the client. If the first operation and maintenance channel instance successfully sends the first access command, the client can receive and execute the first access command. Optionally, a specific process in which the client executes the first access command may include: obtaining a corresponding subprocess in the server OS based on the session identifier carried in the first access command, invoking the subprocess to execute the first access command, and returning an execution result. If the session has not ended after execution of the first access command ends, the operation and maintenance channel management cluster can continue to obtain the access command and repeat the foregoing steps.

If the operation and maintenance channel instance fails to send the access command to the client, the operation and maintenance channel instance can report an exception to the load balancing component, and the load balancing component forwards the access command to another operation and maintenance channel instance that can currently work. The following provides specific descriptions with reference to two examples.

Example 1: In addition to the first operation and maintenance channel instance, the operation and maintenance channel management cluster may further include a second operation and maintenance channel instance. The load balancing component forwards the obtained second access command to the first operation and maintenance channel instance, but the first operation and maintenance channel instance fails to send the second access command to the client after receiving the second access command. For example, because the first operation and maintenance channel instance is currently sending a large quantity of access commands of other sessions, the first operation and maintenance channel instance is overloaded, and the second access command waits and times out. For another example, because the first operation and maintenance channel instance is faulty after receiving the second access command, the first operation and maintenance channel instance loses a normal working capability. In the foregoing case, the first operation and maintenance channel instance can report exception information to the load balancing component. After the load balancing component receives the exception information sent by the first operation and maintenance channel instance, the load balancing component can forward the second access command to the second operation and maintenance channel instance, and the second operation and maintenance channel instance sends the second access command to the client. After the second operation and maintenance channel instance successfully sends the second access command to the client, the client can receive and execute the second access command.

According to the technical solution in this embodiment of this application, when the operation and maintenance channel instance that is currently responsible for forwarding the access command is abnormal due to, for example, load balancing or redundancy, a current node fails to send the access command to the client, and a forwarding task is reallocated to another node in the operation and maintenance channel management cluster, to implement node switching without interrupting access. This improves fast redundancy or a load balancing capability of the operation and maintenance channel management cluster, and improves availability of the service of the operation and maintenance channel management cluster.

Optionally, in the foregoing example, the first operation and maintenance channel instance and the second operation and maintenance channel instance may be deployed in different regions. Because the session state information does not need to be reconfigured during node switching, information exchange may not be required between the nodes of the operation and maintenance channel instance. A physical region in which the operation and maintenance channel instance is located does not need to be limited. This implements cross-region deployment of the operation and maintenance channel instance. In this way, nodes responsible for forwarding before and after the switching are located in different physical regions. This reduces a possibility that exceptions of different nodes occur at the same time, implements geographic redundancy, and further improves availability of the service of the operation and maintenance channel management cluster.

Example 2: The operation and maintenance channel management cluster may further deploy a new operation and maintenance channel instance. After the load balancing component forwards the obtained third access command to the first operation and maintenance channel instance, and the first operation and maintenance channel instance fails to send the third access command and reports an exception, for example, when the operation and maintenance channel management cluster is fully loaded or all operation and maintenance channel instances are faulty, causing the second operation and maintenance channel instance to be in an unavailable state, the load balancing component can establish a third operation and maintenance channel instance, and forward the third access command to the third operation and maintenance channel instance, so that the third operation and maintenance channel instance sends the third access command to the client. In an example, the load balancing component may request one or more compute instances that are not originally included in the operation and maintenance channel management cluster, and include the one or more compute instances in a range of the operation and maintenance channel management cluster, to use the one or more compute instances as the third operation and maintenance channel instance.

It should be understood that, in the foregoing example 2, only a case in which the operation and maintenance channel management cluster currently has no operation and maintenance channel instance that can work is used as an example to describe that the operation and maintenance channel management cluster has a capability of expanding a quantity of operation and maintenance channel instances. It is not limited that an operation and maintenance channel instance can be added only in this case. For example, the user may purchase, through the user interface, a service of the operation and maintenance channel management cluster with a larger specification. In this case, the user interface can also send an instruction to instruct the operation and maintenance channel management cluster to establish a new operation and maintenance channel instance.

According to the technical solution in this embodiment of this application, the operation and maintenance channel management cluster can deploy a new operation and maintenance channel instance, and reallocate the forwarding task to the new operation and maintenance channel instance, to implement capacity expansion of the operation and maintenance channel management cluster without interrupting access. This improves a rapid capacity expansion capability of the operation and maintenance channel management cluster, and improves availability of the service of the operation and maintenance channel management cluster.

Optionally, in contrast to the rapid capacity expansion capability, the operation and maintenance channel management cluster may further provide a rapid reduction capability. For example, when the operation and maintenance channel management cluster needs to delete the first operation and maintenance channel instance, the first operation and maintenance channel instance can report, to the load balancing component, access commands that are currently not successfully sent by the first operation and maintenance channel instance. The load balancing component reallocates these access commands to another operation and maintenance channel instance. In this way, the first operation and maintenance channel instance is deleted from the operation and maintenance channel management cluster.

Because the operation and maintenance channel instance in the technical solution of this application is stateless, switching of the operation and maintenance channel instance responsible for forwarding the access command does not affect the session state information recorded in the client. Therefore, switching of the operation and maintenance channel instance in all the foregoing examples does not cause the user to disconnect the session established between the user and the server. The node after switching can be directly used without configuration, so that time required for switching is controllable and fast, and the foregoing switching process can be completed without being perceived by the user.

In an access management system provided in this embodiment of this application, only a function that requires a node to have a state, for example, session control, is transferred from the operation and maintenance channel management cluster to the client on the target server for execution. A function that can be executed on stateless nodes can continue to be executed by the operation and maintenance channel management cluster to provide users with services such as operation audit, permission management, and graded protection compliance. The operation and maintenance channel management cluster forwards the access command of the user to the server, to isolate the user from the server, and ensure server access security. In addition, access of different users to different servers can be managed in a centralized manner. This facilitates authentication and subsequent responsibility audit.

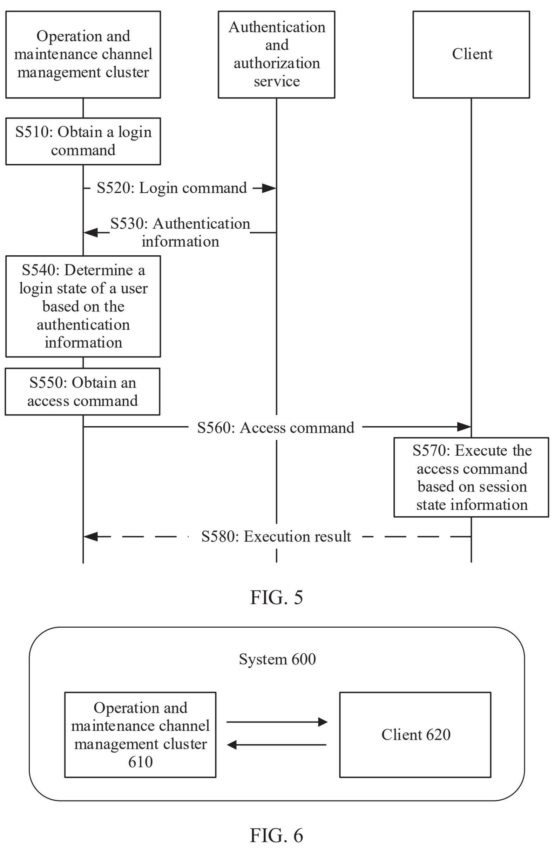

For example, the operation and maintenance channel management cluster can provide an identity authentication service for the user. In this case, FIG. 5 shows a schematic flowchart of an access management method according to an embodiment of this application.

As shown in FIG. 5, the method includes the following steps.

S510: An operation and maintenance channel management cluster obtains a login command.

For example, in step S510, the operation and maintenance channel management cluster can first obtain the login command of a user before establishing a session between the user and a target server. Specifically, the login command is used to confirm an identity of a user who currently requests to log in and an identity of a user who subsequently sends the access command. For example, the user may enter a registered cloud account and a password on a user interface for login. The user interface can generate a login command based on input of the user, and send the login command to the operation and maintenance channel management cluster.

S520: The operation and maintenance channel management cluster sends the login command to an authentication and authorization service.

For example, in step S520, the operation and maintenance channel management cluster can send the login command to the authentication and authorization service, so that the authentication and authorization service authenticates the identity of the user based on the login command. Optionally, the authentication and authorization service includes but is not limited to an IAM service.

S530: The operation and maintenance channel management cluster receives authentication information from the authentication and authorization service.

For example, in step S530, the authentication and authorization service can determine the identity of the user based on the login command sent by the operation and maintenance channel management cluster, to generate the authentication information and send the authentication information to the operation and maintenance channel management cluster, so that the operation and maintenance channel management cluster can receive the authentication information.

S540: The operation and maintenance channel management cluster determines a login state of the user based on the authentication information.

For example, in step S540, the operation and maintenance channel management cluster can determine the login state of the user based on the authentication information. For example, the authentication information may be authentication success information. For example, if the cloud account and the password that are entered by the user are registered and matched, and the user of the cloud account has permission to access at least some cloud services managed by the operation and maintenance channel management cluster, the authentication and authorization service generates and sends the authentication success information. The operation and maintenance channel management cluster can determine, based on the authentication success information, that the user successfully logs in, and can continue to perform a subsequent access step. Alternatively, the authentication information may be authentication failure information. For example, if the cloud account entered by the user is not registered, or the cloud account does not match the password, or the cloud account has no permission to access any cloud service managed by the operation and maintenance channel management cluster, the authentication and authorization service generates and sends the authentication failure information. The operation and maintenance channel management cluster can determine, based on the authentication failure information, that the user fails to log in. Optionally, when authentication fails, the operation and maintenance channel management cluster can notify, through the user interface, the user of a login failure and request the user to log in again. If the user fails to log in again, the user has no permission to perform subsequent access.

It should be understood that, in the foregoing solution, because the authentication information is sent by the authentication and authorization service to the operation and maintenance channel management cluster, any operation and maintenance channel instance in the operation and maintenance channel management cluster can receive the authentication information from the authentication and authorization service when required. Therefore, the login state of the user does not need to be recorded in a node of the operation and maintenance channel management cluster, so that the identity authentication service does not depend on a specific operation and maintenance channel instance. For example, after the operation and maintenance channel instance responsible for forwarding the access command is switched in a session process, the switched operation and maintenance channel instance can request the authentication information of the user from the authentication and authorization service again based on the user that sends the access command, to determine the login state of the user. The user does not need to log in again. This improves user experience while ensuring user access security.

When it is authenticated that the user successfully logs in, an access management system can continue to manage the access command, which specifically includes the following steps.

S550: The operation and maintenance channel management cluster obtains the access command.

S560: The operation and maintenance channel management cluster sends the access command to the client, or the client receives the access command from the operation and maintenance channel management cluster.

Optionally, before sending the access command to the client, the operation and maintenance channel management cluster can further obtain access permission of the user from an external storage service, and determine, based on whether the access command meets the access permission, whether to send the access command to the client. Specifically, the access permission is used to indicate the cloud service that can be accessed by the user and a specific operation that can be performed by the user. If the operation and maintenance channel management cluster determines that the access command meets the access permission, the operation and maintenance channel management cluster can perform step S560 and subsequent steps. If the operation and maintenance channel management cluster determines that the access command does not meet the access permission, the operation and maintenance channel management cluster does not perform S560, and returns to step S550. Optionally, the external storage service includes but is not limited to a database, a cloud database, a cloud storage service, and the like. This is not specifically limited in this application. For example, the external storage service may be an authentication and authorization service. The authentication and authorization service may further store access permission corresponding to the identity of the user while storing a registered identity of the user, so that the access permission of the user is sent to the operation and maintenance channel management cluster when user login authentication succeeds. The external storage service may also be another independent storage service, for example, an RDS. After the access permission of the user is set, the operation and maintenance channel management cluster can upload the access permission to the RDS, so that any operation and maintenance channel instance can request the access permission from RDS when necessary.

According to the foregoing solution, the operation and maintenance channel management cluster can obtain the access permission of the user for the server from the external storage service, so that any node in the operation and maintenance channel management cluster can manage the access permission of the user without pre-configuration. Therefore, the operation and maintenance channel management cluster can provide a permission management service, and access management security is improved.

S570: The client executes the access command based on the session state information.

Optionally, the method may further include the following step.

S580: The client sends an execution result to the operation and maintenance channel management cluster, or the operation and maintenance channel management cluster receives the execution result from the client.

Optionally, implementations of steps S550 to S580 may be the same as those of the foregoing access management method. For specific implementations, refer to the foregoing descriptions of FIG. 3, FIG. 4, and corresponding embodiments. Details are not described herein again.

According to the technical solution in this embodiment of this application, the operation and maintenance channel management cluster can interact with an external authentication and authorization service, to enhance authentication management of the identity of the user.

It should be understood that, in the method shown in FIG. 5, the authentication and authorization service is merely used as an example to describe that the operation and maintenance channel management cluster provided in this embodiment of this application can provide a stateless function, but is not limited to providing an identity authentication function or a permission management function. The operation and maintenance channel management cluster also provides other stateless functions, such as graded protection compliance and operation audit.

For example, the operation and maintenance channel management cluster can perform audit management on a user access operation. Specifically, after the user successfully logs in, the operation and maintenance channel management cluster can simultaneously send, to a CTS, an access command forwarded to the client each time during a session, and also send, to the CTS, a corresponding execution result fed back by the client, so that the CTS monitors and records an entire behavior of the user. When CTS detects that an access behavior of a user has security risks, the operation and maintenance channel management cluster can receive warning information from the CTS. The operation and maintenance channel management cluster prompts the user through the user interface based on the warning information, and can stop forwarding the access command of the user if necessary. When the user requests to view an operation record, the operation and maintenance channel management cluster can send a request to the CTS, receive the operation record from the CTS, and send the operation record to the user through the user interface.

The foregoing describes the embodiments of the access management method provided in this application with reference to FIG. 3 to FIG. 5. The following describes embodiments of an access management apparatus provided in this application with reference to FIG. 6 to FIG. 10.

FIG. 6 shows a diagram of a structure of an access management system 600 according to an embodiment of this application. As shown in FIG. 6, the system 600 includes an operation and maintenance channel management cluster 610 and a client 620, where the client 620 runs on a target server.

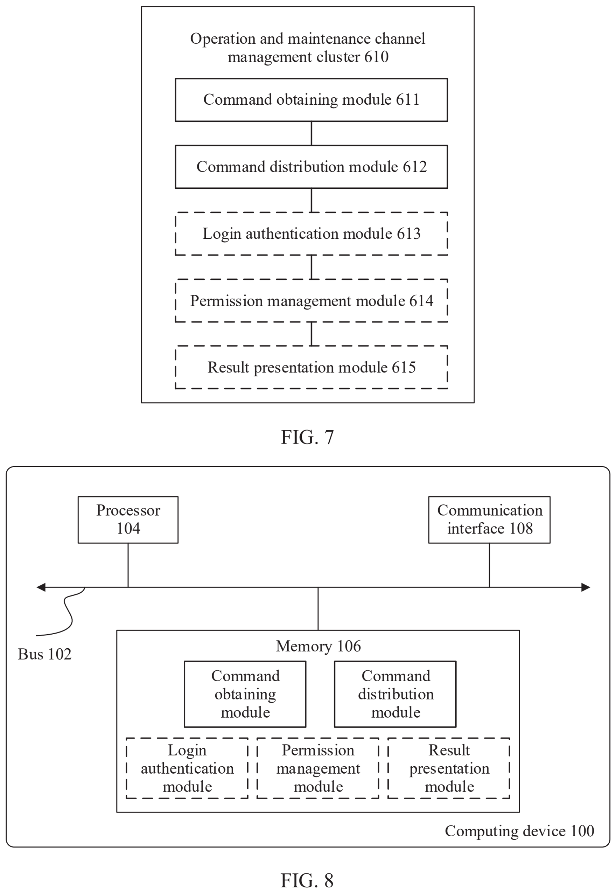

FIG. 7 shows a block diagram of a structure of an operation and maintenance channel management cluster 610 in an access management system 600 according to an embodiment of this application.

As shown in FIG. 7, the operation and maintenance channel management cluster 610 includes a command obtaining module 611 and a command distribution module 612.

Specifically, the command obtaining module 611 is configured to obtain an access command of a user for a target server.

Specifically, the command distribution module 612 is configured to send the access command to a client.

Optionally, the operation and maintenance channel management cluster includes a load balancing component, and the operation and maintenance channel management cluster further includes at least a first operation and maintenance channel instance and a second operation and maintenance channel instance. The load balancing component 612 is specifically configured to: send the access command to the first operation and maintenance channel instance; and the first operation and maintenance channel instance sends the access command to the client.

Optionally, the first operation and maintenance channel instance is further configured to: report exception information to the load balancing component, where the exception information indicates that the first operation and maintenance channel instance fails to send the access command to the client; the load balancing component sends the access command to the second operation and maintenance channel instance; and the second operation and maintenance channel instance sends the access command to the client.

Optionally, the first operation and maintenance channel instance and the second operation and maintenance channel instance are deployed in different regions.

Optionally, the first operation and maintenance channel instance is further configured to: report exception information to the load balancing component, where the exception information indicates that the first operation and maintenance channel instance fails to send the access command to the client; the load balancing component establishes a third operation and maintenance channel instance; the load balancing component sends the access command to the third operation and maintenance channel instance; and the third operation and maintenance channel instance sends the access command to the client.

Optionally, the command distribution module 612 is specifically configured to send the access command to the client based on a transmission control protocol.

Specifically, the client 620 is configured to execute the access command based on session state information, where the session state information is information that is about access of the user to the target server and that is recorded by the client.

Optionally, the access command includes a session identifier, the session state information includes a correspondence between the session identifier and a subprocess in an operating system of the target server, and the client 620 is specifically configured to: determine, based on the session identifier of the access command and the session state information, the subprocess corresponding to the session identifier; and invoke the subprocess to execute the access command.

Optionally, the operation and maintenance channel management cluster 610 further includes a login authentication module 613, and before obtaining the access command of the user for the target server, the operation and maintenance channel management cluster is configured to: obtain a login command of the user; send the login command to an authentication and authorization service, where the authentication and authorization service is used to authenticate an identity of the user; receive authentication information from the authentication and authorization service; and determine a login state of the user based on the authentication information.

Optionally, the operation and maintenance channel management cluster 610 may further include a permission management module 614, and before sending the access command to the client, the operation and maintenance channel management cluster 610 is configured to: obtain access permission from an external storage service; and determine that the access command satisfies the access permission.

Optionally, the client 620 is further configured to: send an execution result of the access command to the operation and maintenance channel management cluster; and the operation and maintenance channel management cluster 610 may further include a result presentation module 615, configured to send the execution result to the user.

The foregoing modules may be implemented by using software, or may be implemented by using hardware. For example, the following uses the command distribution module 612 as an example to describe an implementation of the command distribution module 612. Similarly, for implementations of the command obtaining module 611, the login authentication module 613, the permission management module 614, and the result presentation module 615, refer to an implementation of the command distribution module 612.

The module is used as an example of a software functional unit. The command distribution module 612 may include code running on a compute instance. The compute instance may include at least one of a physical host (a computing device), a virtual machine, and a container. Further, there may be one or more compute instances. For example, the command distribution module 612 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

As an example of a hardware function unit, the command distribution module 612 may include at least one computing device, for example, a server. Alternatively, the command distribution module 612 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

The plurality of computing devices included in the command distribution module 612 may be distributed in a same region, or may be distributed in different regions. The plurality of computing devices included in the command distribution module 612 may be distributed in a same AZ, or may be distributed in different AZs. Similarly, the plurality of computing devices included in the command distribution module 612 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the command obtaining module 611, the command distribution module 612, the login authentication module 613, the permission management module 614, and the result presentation module 615 may be separately configured to perform any step in the foregoing access management method. Steps implemented by the command obtaining module 611, the command distribution module 612, the login authentication module 613, the permission management module 614, and the result presentation module 615 may be specified as required. The command obtaining module 611, the command distribution module 612, the login authentication module 613, the permission management module 614, and the result presentation module 615 respectively implement different steps in the foregoing access management method, to implement all functions of the operation and maintenance channel management cluster.

This application further provides a computing device 100. As shown in FIG. 8, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but this does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a micro processor (micro processor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the command obtaining module, the command distribution module, the login authentication module, the permission management module, and the result presentation module, to implement the foregoing access management method. In other words, the memory 106 stores instructions used to perform the foregoing access management method.

The communication interface 108 uses, for example, but not limited to, the command distribution module such as a network interface card or a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

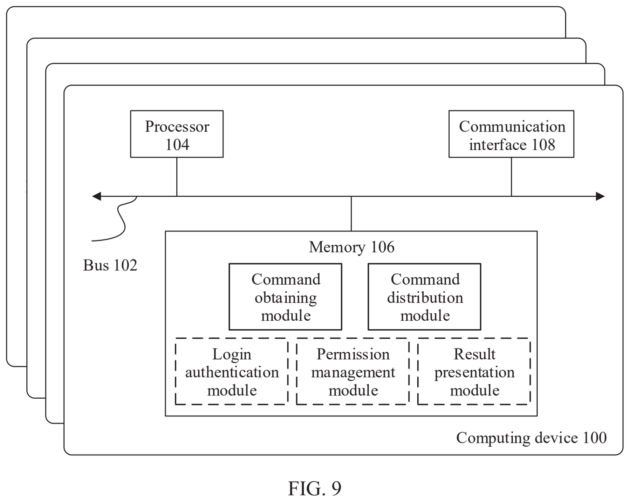

As shown in FIG. 9, the computing device cluster includes at least one computing device 100. The memory 106 in the one or more computing devices 100 in the computing device cluster may store same instructions used to perform the foregoing access management method.

In some possible implementations, the memory 106 of each of the one or more computing devices 100 in the computing device cluster may store some instructions used to perform the foregoing access management method. In other words, a combination of one or more computing devices 100 may jointly execute the instructions used to perform the foregoing access management method.

It should be noted that memories 106 in different computing devices 100 in the computing device cluster may store different instructions separately used for performing some functions of the foregoing operation and maintenance channel management cluster. In other words, the instructions stored in memories 106 in different computing devices 100 may implement functions of one or more of the command obtaining module, the command distribution module, the login authentication module, the permission management module, and the result presentation module.

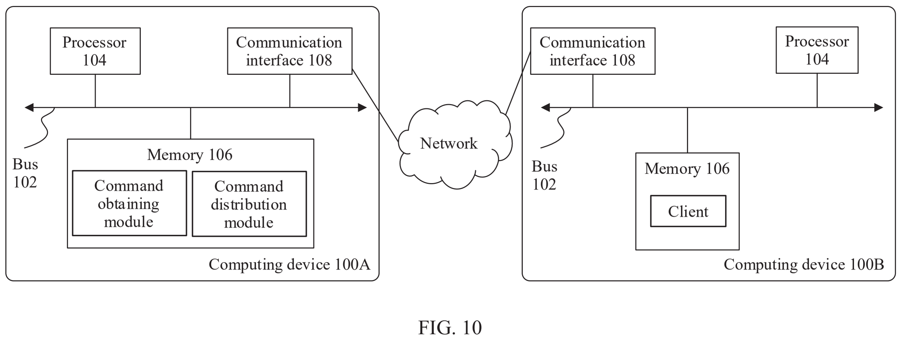

In some possible implementations, the one or more computing devices in the computing device cluster may be connected through a network. The network may be a wide area network, a local area network, or the like. FIG. 10 shows a possible implementation. As shown in FIG. 10, two computing devices 100A and 100B are connected via a network. Specifically, each computing device is connected to the network through a communication interface in the computing device. In this possible implementation, the memory 106 in the computing device 100A stores instructions for executing functions of the command obtaining module and the command distribution module. In addition, the memory 106 in the computing device 100B stores instructions of a function of the client.

It should be understood that functions of the computing device 100A shown in FIG. 10 may be alternatively performed by a plurality of computing devices 100. Similarly, functions of the computing device 100B may also be performed by a plurality of computing devices 100.

An embodiment of this application further provides a chip. The chip includes a processor and a data interface. The processor reads, through the data interface, instructions stored in a memory, to perform the foregoing access management method.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform the foregoing access management method.

Embodiments of this application further provide a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instruction instructs the computing device to perform foregoing management. Technical features may be randomly combined. For brevity of description, all possible combinations of the technical features in the foregoing embodiments are not described, provided that there is no contradiction between the combinations of the technical features, shall be considered to be within the scope disclosed in this specification.

The foregoing embodiments are merely intended to describe the technical solutions of this application, but not intended to limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. An access management method, wherein the method is applied to an access management system, the system comprises an operation and maintenance channel management cluster and a client, the client runs on a target server, the operation and maintenance channel management cluster comprises a plurality of operation and maintenance channel instances, each operation and maintenance channel instance is configured to exchange information with the client, each operation and maintenance channel instance comprises at least one compute instance, and the at least one compute instance comprises at least one of a physical host, a virtual machine, and a container; and the method comprises:
obtaining, by the operation and maintenance channel management cluster, an access command of a user for the target server;
sending, by the operation and maintenance channel management cluster, the access command to the client; and
executing, by the client, the access command based on session state information, wherein the session state information is information that is about access of the user to the target server and that is recorded by the client.

2. The method according to claim 1, wherein the operation and maintenance channel management cluster further comprises a load balancing component, the plurality of operation and maintenance channel instances comprise a first operation and maintenance channel instance and a second operation and maintenance channel instance, and the sending the access command to the client comprises:
sending, by the load balancing component, the access command to the first operation and maintenance channel instance; and
sending, by the first operation and maintenance channel instance, the access command to the client.

3. The method according to claim 2, wherein the sending the access command to the client further comprises:
reporting, by the first operation and maintenance channel instance, exception information to the load balancing component, wherein the exception information indicates that the first operation and maintenance channel instance fails to send the access command to the client;
sending, by the load balancing component, the access command to the second operation and maintenance channel instance; and
sending, by the second operation and maintenance channel instance, the access command to the client.

4. The method according to claim 3, wherein the first operation and maintenance channel instance and the second operation and maintenance channel instance are deployed in different regions.

5. The method according to claim 2, wherein the sending the access command to the client further comprises:
reporting, by the first operation and maintenance channel instance, exception information to the load balancing component, wherein the exception information indicates that the first operation and maintenance channel instance fails to send the access command to the client;
establishing, by the load balancing component, a third operation and maintenance channel instance;
sending, by the load balancing component, the access command to the third operation and maintenance channel instance; and
sending, by the third operation and maintenance channel instance, the access command to the client.

6. The method according to any one of claims 1 to 5, wherein the sending the access command to the client comprises:
sending, by the operation and maintenance channel management cluster, the access command to the client based on a transmission control protocol.

7. The method according to any one of claims 1 to 6, wherein the access command comprises a session identifier, the session state information comprises a correspondence between the session identifier and a subprocess in an operating system of the target server, and the executing the access command based on the session state information comprises:
determining, based on the session identifier of the access command and the session state information, the subprocess corresponding to the session identifier; and
invoking the subprocess to execute the access command.

8. The method according to any one of claims 1 to 7, wherein before obtaining the access command of the user for the target server, the method further comprises:
obtaining, by the operation and maintenance channel management cluster, a login command of the user;
sending, by the operation and maintenance channel management cluster, the login command to an authentication and authorization service, wherein the authentication and authorization service is used to authenticate an identity of the user;
receiving, by the operation and maintenance channel management cluster, authentication information from the authentication and authorization service; and
determining, by the operation and maintenance channel management cluster, a login state of the user based on the authentication information.

9. The method according to any one of claims 1 to 8, wherein before sending the access command to the client, the method further comprises:
obtaining, by the operation and maintenance channel management cluster, access permission from an external storage service; and
determining, by the operation and maintenance channel management cluster, that the access command meets the access permission.

10. The method according to any one of claims 1 to 9, wherein the method further comprises:
sending, by the client, an execution result of the access command to the operation and maintenance channel management cluster; and
sending, by the operation and maintenance channel management cluster, the execution result to the user.

11. An access management system, wherein the system comprises an operation and maintenance channel management cluster and a client, the client runs on a target server, the operation and maintenance channel management cluster comprises a plurality of operation and maintenance channel instances, each operation and maintenance channel instance is configured to exchange information with the client, each operation and maintenance channel instance comprises at least one compute instance, the at least one compute instance comprises at least one of a physical host, a virtual machine, and a container, and the operation and maintenance channel management cluster comprises:
a command obtaining module, configured to obtain an access command of a user for the target server;
a command distribution module, configured to send the access command to the client; and
the client is configured to:
execute the access command based on session state information, wherein the session state information is information that is about access of the user to the target server and that is recorded by the client.

12. The system according to claim 11, wherein the operation and maintenance channel management cluster further comprises a load balancing component, the plurality of operation and maintenance channel instances comprise a first operation and maintenance channel instance and a second operation and maintenance channel instance, and the load balancing component is configured to:
send the access command to the first operation and maintenance channel instance; and
the first operation and maintenance channel instance sends the access command to the client.

13. The system according to claim 12, wherein the first operation and maintenance channel instance is further configured to:
report exception information to the load balancing component, wherein the exception information indicates that the first operation and maintenance channel instance fails to send the access command to the client;
the load balancing component sends the access command to the second operation and maintenance channel instance; and
the second operation and maintenance channel instance sends the access command to the client.

14. The system according to claim 13, wherein the first operation and maintenance channel instance and the second operation and maintenance channel instance are deployed in different regions.

15. The system according to claim 12, wherein the first operation and maintenance channel instance is further configured to:
report exception information to the load balancing component, wherein the exception information indicates that the first operation and maintenance channel instance fails to send the access command to the client;
the load balancing component establishes a third operation and maintenance channel instance;
the load balancing component sends the access command to the third operation and maintenance channel instance; and
the third operation and maintenance channel instance sends the access command to the client.

16. The system according to any one of claims 11 to 15, wherein the command distribution module is configured to:
send the access command to the client based on a transmission control protocol.

17. The system according to any one of claims 11 to 16, wherein the access command comprises a session identifier, the session state information comprises a correspondence between the session identifier and a subprocess in an operating system of the target server, and the client is configured to:
determine, based on the session identifier of the access command and the session state information, the subprocess corresponding to the session identifier; and
invoke the subprocess to execute the access command.

18. The system according to any one of claims 11 to 17, wherein the operation and maintenance channel management cluster further comprises a login authentication module, and before obtaining the access command of the user for the target server, the operation and maintenance channel management cluster is configured to:
obtain a login command of the user;
send the login command to an authentication and authorization service, wherein the authentication and authorization service is used to authenticate an identity of the user;
receive authentication information from the authentication and authorization service; and
determine a login state of the user based on the authentication information.

19. The system according to any one of claims 11 to 18, wherein the operation and maintenance channel management cluster further comprises a permission management module, and before sending the access command to the client, the operation and maintenance channel management cluster is configured to:
obtain access permission from an external storage service; and
determine that the access command satisfies the access permission.

20. The system according to any one of claims 11 to 19, wherein the client is further configured to:
send an execution result of the access command to the operation and maintenance channel management cluster; and
the operation and maintenance channel management cluster further comprises a result presentation module, configured to send the execution result to the user.

21. A computing device, comprising a processor and a memory, wherein the processor is configured to execute instructions stored in the memory, to enable the computing device to perform the method according to any one of claims 1 to 10.

22. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 10.

23. A computer-readable storage medium, comprising computer program instructions, wherein when the computer instructions are executed by a computing device cluster, the computing device cluster is enabled to perform the method according to any one of claims 1 to 10.
